# EUROPEAN PATENT SPECIFICATION

(11) **EP 1 692 954 B1**
(45) Date of publication and mention of the grant of the patent: **17.08.2011**
(21) Application number: 05077126.0
(22) Date of filing: 19.09.2005
(51) Int. Cl.: A23N 1/02, A23N 15/00

(54) **Combination of a decanter and a transportable expulsion system of olive residue coming from said decanter**
Kombination eines Dekanters und eines Transportierbaren Abfuhrsystems für Olivenreste, welche aus dem genannten Dekanter zugeführt werden
Combinaison d'un décanteur et d'un système transportable d'évacuation de résidus d'olives en provenance dudit décanteur

(30) Priority: 16.02.2005 IT RE20050005 U
(43) Date of publication of application: 23.08.2006
(73) Proprietor: Ing. Bonfiglioli S.p.A., 40050 Castello d'Argile (Bologna) (IT)
(72) Inventor: Bonfiglioli, Giancarlo c/o Ing. Bonfiglioli S.P.A., 40050 Castello D'Argile (Bologna) (IT)
(74) Representative: Corradini, Corrado

(56) References cited:
- FR-A- 670 500
- US-A- 3 606 181

## Description

The present invention refers to a transportable expulsion system of olive residue coming from a decanter.

More specifically, the present finding refers to a system comprising an expulsion Archimedean screw and an olive residue collector fixed to the olive residue outlet end of the decanter.

As known, the olives, once crushed and transformed into paste, arrive at the centrifugal separator with horizontal axis, known as a decanter. The decanter allows the three phases present in the paste (oil, water, olive residue), with different specific weight, to be separated by means of centrifugal force.

At the end opposite the introduction of the olive paste and water there is a motor, with a connection system to the Archimedean screw and to the drum, and a differential revolution regulator that allows intervention on the degree of separation and on the retention time of the paste inside the decanter, according to the type of olives and paste processed.

The oily must (water and oil), coming out from the decanter, is pumped inside a centrifugal separator with vertical axis that takes care of completing the separation of the oil from the vegetation waters.

On the other hand, the olive residue is collected at the outlet end by an annular collector and sent to an expulsion Archimedean screw that must be suitably associated with the decanter in order to work correctly.

Should it be necessary to transport the centrifugal separator from one place to another it is necessary to carry out removal and subsequent attachment operations of the expulsion Archimedean screw associated with the decanter since it has a certain bulk above all along its longitudinal direction.

Indeed, in the use position, the expulsion Archimedean screw is positioned radially with respect to the decanter taking up an L-shaped configuration with it and therefore making transportation impractical without first entirely removing the expulsion Archimedean screw that shall then be remounted onto the decanter.

FR 670 500 discloses an oil extraction apparatus in which a disintegrator element is provided that has fixed and moving parts, the moving parts being animated with relative movement one with respect to the other and separated by an opportune distance. Under the disintegrator element an envelope containing an Archimedean screw is connected to the outlet of said disintegrator and is designed to work in close association with underlying containers. The envelope of the screw is perforated in its bottom part to let the residue flow into the containers.

While such apparatus performs oil extractions operations, it is not designed to be transported easily.

Therefore, there is a great requirement to have an expulsion system of olive residue coming from a decanter that has easier application and that can be transported avoiding the drawbacks deriving from the attachment and/or removal operations thereof.

The purpose of the present finding is that of providing an expulsion system of olive residue coming from a decanter having structural and functional characteristics such as to satisfy the aforementioned requirements and at the same time to avoid the aforementioned drawbacks with reference to the prior art.

Such a purpose is accomplished through a transportable expulsion system of olive residue coming from a decanter in accordance with claim 1. The dependent claims outline preferred and particularly advantageous embodiments of the system according to the invention.

Further characteristics and advantages of the finding shall become clear from reading the following description provided as an example and not for limiting purposes, with the help of the figures illustrated in the attached tables, in which:
- figure 1 shows a front view of an expulsion system of olive residue in accordance with the present invention, with the expulsion Archimedean screw in the use position;
- figure 2 shows a view from above of the system of figure 1 associated with a decanter in the use and rest positions, respectively;

With reference to the aforementioned figures, a expulsion system of olive residue coming from the decanter 100, transportable on a vehicle, in accordance with the present finding, is globally indicated with 1.

Said system 1 comprises an expulsion Archimedean screw 2 and an olive residue collector 3.

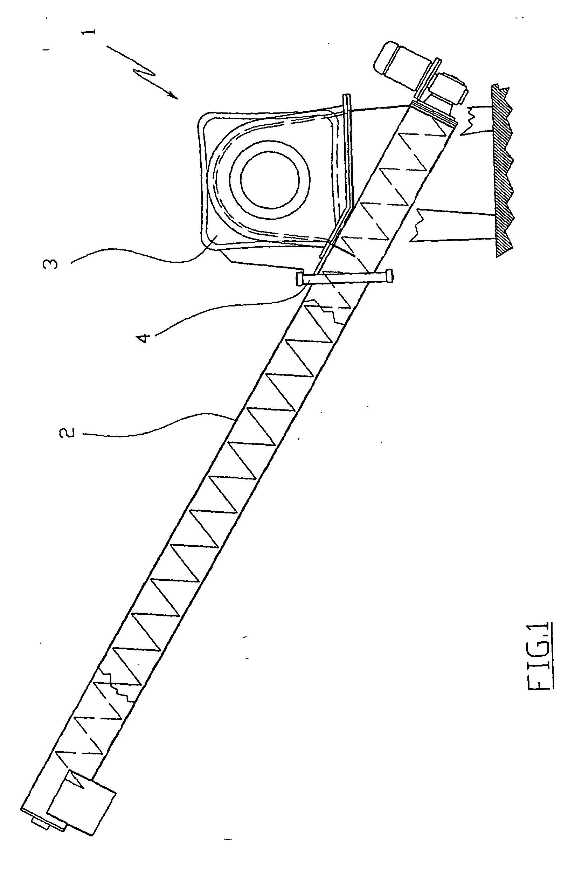

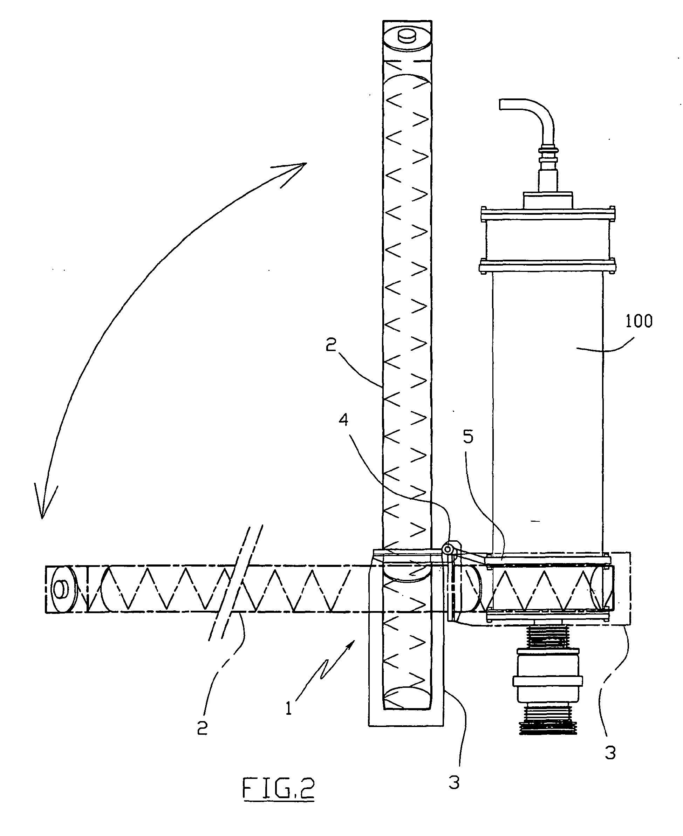

The system of the present finding can take up a use position, illustrated in figure 1 and with a broken line in figure 2, in which the longitudinal axis of the Archimedean screw 2 is arranged radially with respect to the longitudinal axis of the decanter 100, and a rest position, illustrated with a solid line in figure 2, in which the longitudinal axis of the Archimedean screw 2 lies on a vertical plane that is parallel with respect to the vertical plane of the longitudinal axis of the decanter 100, and parallel to the axis of the vehicle.

The passage from one position to another and vice-versa is allowed by the presence of suitable moving means that in the illustrated example are in the form of a pin 4 with vertical axis fixed to the decanter 100 near to the olive residue outlet end through an annular flange 5.

In the illustrated embodiment, the Archimedean screw 2 and the collector 3 are associated to form a single piece.

Basically, in the use position, the collector 3 is fixed, for example, through bolts, to the end of the decanter 100 where the olive residue is expelled, thus the Archimedean screw 2 is arranged radially with respect to the decanter 100.

In the rest position, the collector 3 is detached from the decanter 100 and made to rotate about the rotation pin 4, which is fixed to the decanter 100, until the Archimedean screw 2, which is integral with it, is taken to the side of the decanter 100 so that they are arranged on two vertical planes that are parallel to each other.

Suitable positioning and stop means, not illustrated, removably lock the Archimedean screw 2 in the rest position in order to avoid it being able to oscillate about the pin 4 during transportation.

In the illustrated example, both in the rest position and in the use position, the Archimedean screw 2 is arranged with its longitudinal axis inclined with respect to a horizontal plane.

It is possible to foresee, in addition to the vertical rotation pin, a further kinematism suitable for rotating the Archimedean screw 2 to take it into horizontal position so as to be able to arrange it parallel to the decanter 100 in the rest position.

In the previous description although explicit reference has been made to a system in which the expulsion Archimedean screw 2 and the collector 3 are integral with each other, it is, nevertheless, possible to foresee the embodiment of a system 1 according to the finding with the two pieces separate from each other, for example, with the collector 3 fixed to the decanter 100 and just the Archimedean screw 2 rotating about the pin 4.

As can be appreciated from what has been described, a transportable expulsion system of olive residue coming from the decanter according to the present finding allows the requirements to be satisfied and allows the drawbacks mentioned in the introductory part of the present description with reference to the prior art to be overcome.

Indeed, the olive residue expulsion Archimedean screw can be easily transported with little bulk without the need to remove it at all beforehand from the decanter.

Moreover, the system of the present finding gives greater overall rigidity to the assembly made up of the expulsion Archimedean screw and the collector since in the preferred embodiment they are integral with each other.

Of course, a man skilled in the art can bring numerous modifications and variants to the olive residue expulsion system described above in order to satisfy contingent and specific requirements, all of which are covered by the scope of protection of the invention, as defined by the following claims.

## Claims

1. A combination of a transportable expulsion system (1) and a decanter (100), said transportable expulsion system being suitable for transporting olive residue coming from the decanter (100), said decanter (100) having a horizontal axis and an olive residue outlet end, said transportable expulsion system comprising an expulsion Archimedean screw (2) and an olive residue collector (3), and being suitable for being fixed to the olive residue outlet end from the decanter (100), **characterised in that** it comprises moving means including a rotation pin (4) with vertical axis suitable for allowing the Archimedean screw (2) to take up a first use position in which the longitudinal axis of the Archimedean screw (2) is arranged radially with respect to the horizontal axis of the decanter (100), in such a way to form a L-shaped configuration with said horizontal axis of the decanter (100) and a second rest position in which the longitudinal axis of the Archimedean screw (2) lies on a vertical plane that is parallel with respect to the vertical plane of the horizontal axis of the decanter (100).

2. A combined apparatus (1) according to claim 1, wherein said rotation pin (4) is fixed to the decanter (100) near to the olive residue outlet end through a flange (5).

3. A combined apparatus (1) according to claim 2, wherein said Archimedean screw (2) is rotatably associated with the olive residue collector (3) through said rotation pin (4).

4. A combined apparatus (1) according to claim 1, wherein said olive residue collector (3) is integral with the Archimedean screw (2) and moves with it.

5. A combined apparatus (1) according to claim 1, wherein said Archimedean screw (2) is arranged with its longitudinal axis inclined with respect to a horizontal plane both in the rest position and in the use position.

6. A combined apparatus according to claim 1, further comprising positioning and stop means cooperating with said Archimedean screw (2) in the rest and use position, respectively.

## Patentansprüche

1. Kombination aus einem transportablen Austragsystem (1) und einer Dekanterzentrifuge (100), wobei das transportable Austragsystem geeignet ist, von der Dekanterzentrifuge (100) kommenden Oliventrester zu transportieren, wobei die Dekanterzentrifuge (100) eine horizontale Achse und ein Oliventresterauslassende aufweist, wobei das transportable Austragsystem eine archimedische Austragschnecke (2) und einen Oliventrestersammler (3) umfasst und am Oliventresterauslassende der Dekanterzentrifuge (100) befestigt werden kann, **dadurch gekennzeichnet, dass** sie einen Drehbolzen (4) mit vertikaler Achse einschließende Bewegungsmittel umfasst, die es ermöglichen können, dass die archimedische Schnecke (2) eine erste Gebrauchsstellung, in der die Längsachse der archimedischen Schnecke (2) derart radial zur horizontalen Achse der Dekanterzentrifuge (100) angeordnet ist, dass sie mit der horizontalen Achse der Dekanterzentrifuge (100) eine L-förmige Konfiguration bildet, und eine zweite Ruhestellung einnimmt, in der die Längsachse der archimedischen Schnecke (2) in einer vertikalen Ebene liegt, die parallel zur vertikalen Ebene der horizontalen Achse der Dekanterzentrifuge (100) ist.

2. Kombinierte Vorrichtung (1) nach Anspruch 1, bei welcher der Drehbolzen (4) mit einem Flansch (5) in der Nähe des Oliventresterauslassendes an der Dekanterzentrifuge (100) befestigt ist.

3. Kombinierte Vorrichtung (1) nach Anspruch 2, bei der die archimedische Schnecke (2) durch den Drehbolzen (4) drehbar mit dem Oliventrestersammler (3) verbunden ist.

4. Kombinierte Vorrichtung (1) nach Anspruch 1, bei welcher der Oliventrestersammler (3) ein Ganzes mit der archimedischen Schnecke (2) bildet und sich mit ihr bewegt.

5. Kombinierte Vorrichtung (1) nach Anspruch 1, bei der die archimedische Schnecke (2) sowohl in der Ruhestellung als auch in der Gebrauchsstellung so angeordnet ist, dass ihre Längsachse zu einer horizontalen Ebene geneigt ist.

6. Kombinierte Vorrichtung nach Anspruch 1, die ferner Positionier- und Arretiermittel umfasst, die mit der archimedischen Schnecke (2) jeweils in der Ruhe- und der Gebrauchsstellung zusammenarbeiten.

## Revendications

1. Combinaison d'un système d'expulsion transportable (1) et d'une décanteuse (100), ledit système d'expulsion transportable étant adapté pour transporter des résidus d'olives provenant de la décanteuse (100), ladite décanteuse (100) ayant un axe horizontal et une extrémité de sortie de résidus d'olives, ledit système d'expulsion transportable comprenant une vis d'Archimède d'expulsion (2) et un collecteur de résidus d'olives (3) et étant adapté pour être fixé à l'extrémité de sortie de résidus d'olives provenant de la décanteuse (100), **caractérisée en ce qu'**elle comprend des moyens de déplacement comprenant une goupille de rotation (4) avec axe vertical, adaptée pour permettre à la vis d'Archimède (2) d'assumer une première position d'utilisation dans laquelle l'axe longitudinal de la vis d'Archimède (2) est disposé radialement par rapport à l'axe horizontal de la décanteuse (100), de manière à former une configuration en forme de L avec ledit axe horizontal de la décanteuse (100) et une deuxième position de repos dans laquelle l'axe longitudinal de la vis d'Archimède (2) se trouve dans un plan vertical qui est parallèle au plan vertical de l'axe horizontal de la décanteuse (100).

2. Appareil combiné (1) selon la revendication 1, dans lequel ladite goupille de rotation (4) est fixée à la décanteuse (100) près de l'extrémité de sortie de résidus d'olives par le biais d'une bride (5).

3. Appareil combiné (1) selon la revendication 2, dans lequel ladite vis d'Archimède (2) est associée de manière rotatoire avec le collecteur de résidus d'olives (3) par le biais de ladite goupille de rotation (4).

4. Appareil combiné (1) selon la revendication 1, dans lequel ledit collecteur de résidus d'olives (3) est d'une seule pièce avec la vis d'Archimède (2) et se déplace avec elle.

5. Appareil combiné (1) selon la revendication 1, dans lequel ladite vis d'Archimède (2) est agencée avec son axe longitudinal incliné par rapport à un plan horizontal dans la position de repos et dans la position d'utilisation.

6. Appareil combiné selon la revendication 1, comprenant en outre des moyens de positionnement et d'arrêt coopérant avec ladite vis d'Archimède (2) respectivement dans la position de repos et d'utilisation.
